# EUROPEAN PATENT SPECIFICATION

(11) **EP 0 466 803 B1**
(45) Date of publication and mention of the grant of the patent: **15.06.1994**
(21) Application number: 90906415.6
(22) Date of filing: 02.04.1990
(51) Int. Cl.: B01D 53/34

(54) **METHOD FOR CLEANING FLUE GAS FORMED ON REFUSE INCINERATION**
VERFAHREN ZUR REINIGUNG VON RAUCHGAS GEBILDET BEI VERBRENNUNG VON ABFÄLLEN
PROCEDE POUR NETTOYER DES GAZ DE FUMEE FORMES LORS DE L'INCINERATION DE DECHETS

(30) Priority: 07.04.1989 SE 8901252
(43) Date of publication of application: 22.01.1992
(73) Proprietor: ABB FLÄKT AB, S-120 86 Stockholm (SE)
(72) Inventor: CARLSSON, Kurt, S-352 42 Växjö (SE)
(74) Representative: Dahlstrand, Björn
(86) International application number: SE9000209
(87) International publication number: WO9011817

(56) References cited:
- EP-A- 0 253 563
- DE-A- 3 702 306
- DE-C- 3 426 059
- Patent Abstracts of Japan, Vol 4, No 129, C 24 abstract of JP 55-81771, publ 1980-06-20 (EBARA INFILCO K.K.)

## Description

### Technical area

The present invention relates to a method for cleaning flue gas formed on incineration of refuse, for example domestic refuse, and containing particulate impurities, such as fly ash; gaseous organic impurities, inter alia aromatic chlorine compounds; gaseous trace elements, for instance heavy metals; and acidifying impurities, such as nitrogen oxides, hydrogen chloride, and sulphur dioxide.

The flue gas is cleaned in at least two steps. First, the particulate impurities are separated in a separation step, and later, the acidifying impurities are removed from the flue gas in a gas washing step. However, before the separation step the flue gas is brought into contact with one or more substances reacting with the gaseous trace elements and supplied in the form of a dry powder or fine liquid droplets, and/or an adsorption material reacting with the gaseous organic impurities, for transforming the trace elements and/or the last-mentioned impurities into particulate impurities which are separated from the flue gas in the above-mentioned separation step.

### Background of the invention

In the cleaning of flue gas, solid, liquid or gaseous impurities are separated from the flue gas in order to reduce the negative effect of the gas on the environment. The separation of solid particles and droplets is, for instance, carried out with the aid of inertial forces or electrostatic fields, or by utilising the screening effect of barrier filters.

Gaseous impurities are separated by being absorbed by or dissolved in additives, or by being adsorbed to solid surfaces. Other possible methods include converting the gaseous impurities into liquid or particle form by means of additives or by cooling, or by decomposing the impurities into harmless components.

Frequently, several methods are combined. In one of the most common methods for cleaning flue gas formed on refuse incineration, particles are separated in an electrostatic precipitator, whereupon lime in the form of particles or a suspension in water is added, and the resulting reaction products, together with unreacted lime, is separated in a textile barrier filter (see, for example, US 4,975,366).

DE 33 20 466 and DE 33 24 133 disclose another example of a method combining several cleaning techniques. In this method, the main portion of the particulate impurities, containing most of the heavy metals, is first separated from the flue gas, whereupon hydrogen chloride and mercury are separated in a wet washing step in which the washing liquid is acid, i.e. has a low pH value. Finally, sulphur oxides and nitrogen oxides are washed away in a wet washing step in which the washing liquid is alkaline, i.e. has a high pH value.

### Technical problems

As a rule, flue gas cleaning implies removing from the flue gas an element injurious to the environment. However, the environmental hazard frequently remains, since the contamination only is transformed from the gaseous phase to the liquid or solid phase and instead pollutes the soil, lakes, water courses, or ground water. Regrettably, this frequently means that considerable amounts of unusable waste products have to be kept in safe storage for all time.

Therefore, the problem is to provide methods which reduce, as far as possible, the total strain on the environment, and methods which result in small amounts of waste products while permitting a high degree of reuse of the substances in the refuse, which accompany the flue gas formed on refuse incineration.

It is an advanced technical problem not only to separate the aromatic chlorine compounds, such as dioxins, formed on the incineration, but also to render these totally innocuous by decomposing them into harmless substances.

Furthermore, it is an advanced technical problem to create possibilities for an efficient separation of heavy metals in one separation step which is primarily intended for fly ash, as well as to recover, in the same method and in a simple manner, the main portion of the heavy metals from the fly ash and to convert the remainder into a highly stable waste product which, without any risks whatsoever, can be kept in safe storage.

Finally, it is also an advanced technical problem to create such conditions that acid inorganic impurities can be washed from flue gas formed on refuse incineration, and that a substantially closed liquid flow can be obtained and all the resulting by-products recycled or reused.

### Description of the invention

### Solution

To efficiently reduce the strain on the environment caused by the incineration of refuse, the present invention provides a method for cleaning flue gas in several steps.

First, the flue gas which contain both particulate and gaseous impurities is brought into contact with one or more substances reacting with the gaseous trace elements and/or gaseous organic impurities, such that the gaseous impurities are transformed into particles. The additives may be suspended or dissolved in a liquid, e.g. water, but they may also be dry particles. They may also be activated carbon or zeolites adapted to bind impurities on their surface by adsorption. The impurities transformed in this fashion may be mercury, lead or aromatic chlorine compounds, such as chlorobenzenes.

Then, the fly ash and the impurities transformed into particles are separated in a dust separator which preferably consists of a textile barrier filter which has excellent separation ability, also for very fine-grained particles.

Suitably, the flue gas cleaned of particulate impurities in this fashion is then conducted to a device where nitrogen oxides are reduced and decomposed into nitrogen and water vapour, and thus are rendered completely harmless.

From this device, the gas is conducted to a gas washing device, preferably comprising two part steps, where the gas is brought into contact with a liquid which absorbs the acidifying impurities. In the first part washing step, the liquid has a low pH value, which means that the main portion of the hydrogen chloride is separated, while the sulphur dioxide remains unchanged. In the second part step, the washing liquid is neutral or basic, entailing a highly efficient separation of the sulphur dioxide. Sodium hydroxide is a suitable absorbent.

The flue gas thus cleaned can be discharged into the atmosphere without having any real negative effects on the environment.

According to the method according to the present invention, the fly ash and other particles separated in the dust separator are heated to such a high temperature that all the organic component parts are decomposed, so that most of the separated heavy metals depart in gaseous state and the ash melts into vitreous sand.

The gas resulting from this process is cooled very rapidly, such that there is not time for any new formation of dioxins. Suitably, the cooling is carried out by an admixture of cold air, whereupon the heavy metals are separated in one or more steps so as to be recovered. As need be, this is done by use of additives admixed to the departing gas before or after the cooling, optionally in several steps.

The main contaminant of the gas departing from the heated ash is, after these steps, hydrogen chloride. Therefore, the gas is recycled to the flue gas from the incinerator, before the first separation step. The hydrogen chloride will be separated in the previously described first washing step.

Only vitreous sand and reusable residues with a high concentration of heavy metals remain after the particle cleaning step.

The washing liquid used in the first part washing step is enriched with sodium chloride and can be efficiently cleaned by electrolysis, whereby products which can be recycled to the process and/or be used in the chemical industry are obtained.

The washing liquid used in the second part washing step is mainly enriched with sodium sulphate. After evaporation, a solid residue, Glauber's salt which has a market in the chemical industry, is obtained.

### Advantages

The present invention provides a method which makes it possible to clean the flue gas formed on the incineration of refuse, e.g. domestic refuse, at moderate costs and with a very slight strain on the environment. The main portion of the impurities normally discharged into the atmosphere on this kind of incineration are separated in such a manner that they can be reused.

The formed dioxins are effectively destroyed, and the remaining fly ash chiefly contains harmless oxides. Any trace elements and heavy metals that may remain in the fly ash are entrapped in fused vitrified oxides and have excellent resistance against leaching.

Previous methods (see, for example, DE 33 20 466 and DE 33 24 133) do not provide a satisfactory overall solution, although a method for recovering part of the heavy metals is disclosed.

### Description of the embodiments

The invention will be described in more detail below, reference being had to the accompanying drawings which schematically illustrates an embodiment for carrying out the method according to the present invention.

The embodiment comprises a pretreatment step 51, a separation step 52, a reduction step 53, and a gas washing step 54a, 54b downstream of a conventional incineration plant (not shown) for burning refuse, e.g. domestic refuse. The flue gas formed on the incineration and containing particulate impurities, so-called fly ash; gaseous organic impurities, such as aromatic chlorine compounds; gaseous acidifying impurities, e.g. nitrogen oxides, hydrogen chloride, and sulphur dioxide; and gaseous heavy metals, is first introduced into the pretreatment step 51 via a conduit 55. In this step which comprises for example a contact reactor of the type disclosed in European Patent Application 86850134-7, the flue gas is brought into contact with one or more metal sulphides, preferably sodium sulphide, introduced into the pretreatment step in the form of a dry powder or fine liquid droplets, via a conduit 56. The metal sulphides will react with the gaseous heavy metals of the flue gas which are thus transformed into particles.

In order to transform also the aromatic chlorine compounds of the flue gas into separable particles, activated carbon or zeolite serving as adsorption material for these chlorine compounds are introduced into the pretreatment step 51 via a conduit 57.

Together with unreacted metal sulphides, unreacted adsorption material, and the fly ash of the flue gas, the particles formed in the pretreatment step 51 are carried along by the flue gas, via a conduit 58, to the separation step 52 which may be a textile barrier filter. The heavier of the above-mentioned particulate impurities are not carried along by the flue gas, but fall to the bottom of the contact reactor, from where they are removed, via a conduit 59, to a heating step 70.

In the separation step 52, the particulate impurities in the flue gas are separated, such that the flue gas, after the separation step, chiefly contains acidifying impurities, i.e. nitrogen oxides, hydrogen chloride, and sulphur dioxide. The particulate impurities separated in the separation step are then conducted, via a conduit 60, to the above-mentioned heating step 70. As described above, these particulate impurities are fly ash, the aromatic chlorine compounds, such as dioxins, and the gaseous heavy metals which have been transformed in the pretreatment step to particles, and the unreacted metal sulphides and activated carbon added to this step.

The heating step may comprise an electrically heated melting furnace in which the particulate impurities are heated to such a high temperature (about 1300°C) that the aromatic chlorine compounds are decomposed and transformed into carbon dioxide, water vapour and hydrogen chloride; that most of the separated heavy metals depart in gaseous state; and that the fly ash melts into vitreous sand. The above-mentioned, unreacted metal sulphides are decomposed, and their metals depart in gaseous state, while the sulphur is transformed into sulphur dioxide. The activated carbon is oxidised to carbon dioxide.

The vitreous sand is removed from the heating step 70 via a conduit 71 and collected in a container (not shown) and may, for example, be used as road construction material. The gas formed on the heating is conducted, via a conduit 72, to a cooling step 73 where it is rapidly cooled to about 200°C or lower by the admixture of cold air so as to prevent any new formation of dioxins. By this cooling most of the heavy metals, in particular lead, cadmium, zinc and antimony, pass on from the gaseous phase into the solid phase and may then be separated from the gas in a subsequent separation step 74.

Thus, the dust separated from the gas in the separation step 74 has a high content of reusable heavy metals and is removed from said step 74 and collected in a container (not shown) via a conduit 75.

Then, the gas is conducted, via a conduit 76, to an aftertreatment step 77 in which it is brought into contact with metal sulphides for the transformation into particles of the heavy metals, mostly mercury, which still are in the gaseous phase. This step may comprise a textile barrier filter, such as a bag filter, coated with metal sulphides. The heavy metal sulphides removed from the gas in this step are conducted, via a conduit 78, to a storage container (not shown).

After these treatment steps, the gas thus chiefly contains gaseous and acidifying impurities, in particular hydrogen chloride, and is therefore recycled, via a conduit 79, to the flue gas upstream of the separator step 52.

From the separation step 52, the flue gas is taken, via a conduit 61, to a reduction step 53 adapted to reduce the nitrogen oxides in the flue gas and positioned between the separation step 52 and the gas washing step 54a, 54b. The reduction step comprises a selective catalytic reactor, for example of the type described in SE 8700117-8. The reducing agent is ammonia which is supplied to the reduction step via a conduit 62. Thus, the nitrogen oxides are transformed into nitrogen gas and water vapour presenting no danger to the environment.

From the reduction step, the flue gas is taken, via a conduit 63, to the gas washing step which comprises two part steps 54a and 54b in the form of wet scrubbers.

In the first part step 54a, the flue gas is washed with an acid washing liquid containing sodium hydroxide and having a pH below 2, which entails that the main portion of the hydrogen chloride of the flue gas is separated in the form of sodium chloride. The sulphur dioxide, which is not affected by the first part step, is instead separated in the second part step 54b where the flue gas is washed with a neutral or basic washing liquid also containing sodium hydroxide. Thus, the sulphur dioxide is mainly transformed into sodium sulphate.

The sodium chloride solution formed in the part step 54a is conducted, via the conduit 65, to an electrolysis plant 80 where it is transformed into sodium hydroxide and chlorine gas by means of electrolysis. The sodium hydroxide is recycled to the washing steps via a conduit 81, while the chlorine gas is conducted, via a conduit 82, to a storage container (not shown). The gas may, for instance, be reused in the paper or plastic industry.

The sodium sulphate solution formed in the part step 54b is transformed, in an evaporation step 83, into Glauber's salt and water vapour which are removed from this step via conduits 84 and 85, respectively. Glauber's salt may, for example, be used in the chemical industry.

It goes without saying that the invention is not restricted to the embodiments described above and may be modified in various ways within the scope of the appended claims.

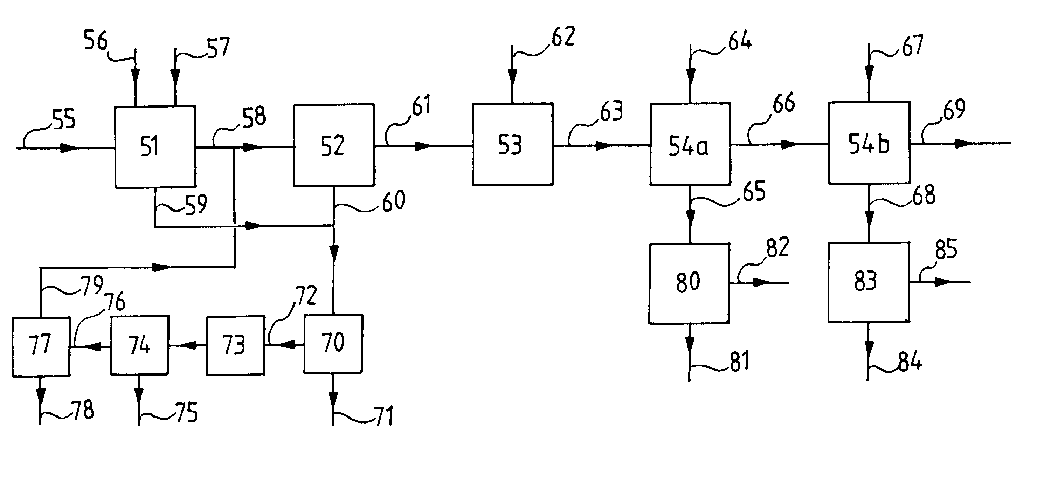

## Claims

1. A method for cleaning flue gas formed on incineration of refuse, for example domestic refuse, and containing particulate impurities; gaseous organic impurities, such as aromatic chlorine compounds; gaseous inorganic and acidifying impurities, e.g. hydrogen chloride, sulphur dioxide, and nitrogen oxides; and gaseous trace elements, such as heavy metals, the flue gas being cleaned of its particulate impurities in a separation step (52), whereupon it is cleaned of its gaseous inorganic and acidifying impurities in at least one gas washing step (54a, 54b), the flue gas before the separation step (52) being brought into contact with one or more substances reacting with the gaseous trace elements and supplied in the form of a dry powder or fine liquid droplets, and/or an adsorption material reacting with the gaseous organic impurities, for transforming the trace elements and/or the last-mentioned impurities into particulate impurities which are separated from the flue gas in the above-mentioned separation step, **characterised** in that the particulate impurities separated in the separation step (52) are heated to such a high temperature that substantially all the organic impurities are decomposed, and that most of the trace elements are evaporated, while the remaining particulate impurities are transformed into vitreous sand by melting.

2. A method as claimed in claim 1, **characterised** in that the substance or substances reacting with the trace elements are one or more metal sulphides, preferably sodium sulphide.

3. A method as claimed in claim 1 or 2, **characterised** in that the adsorption material is activated carbon or zeolite.

4. A method as claimed in any one of claims 1-3, **characterised** in that the heating is carried out to a temperature above 1100°C, preferably above 1300°C.

5. A method as claimed in claim 4, **characterised** in that the gas formed on said heating is rapidly cooled to a temperature below 300°C, preferably 200°C or lower, by supplying cold air.

6. A method as claimed in claim 5, **characterised** in that one or more of the substances reacting with said gaseous trace elements are admixed to said gas before and/or after the cooling for the transformation of the trace elements into particulate impurities.

7. A method as claimed in claim 6, **characterised** in that said gas, after a further separation of particulate impurities, is admixed to the flue gas generated by the refuse incineration.

8. A method as claimed in claim 5 or 6, **characterised** in that the trace elements are separated in a number of selective steps.

9. A method as claimed in any one of the preceding claims, **characterised** in that the flue gas, between the separation step (52) and the gas washing step (54a, 54b), is conducted through a selective catalytic reactor (53) for the reduction of nitrogen oxides.

10. A method as claimed in any one of the preceding claims, **characterised** in that the gas washing step comprises two part steps (54a, 54b), an acid washing liquid preferably having a pH below 2 being conducted through the first part step, and a neutral or basic washing liquid being conducted through the second part step.

11. A method as claimed in claim 10, **characterised** in that the washing liquid from the first gas washing part step (54a) is cleaned by electrolysis.

12. A method as claimed in claim 10, **characterised** in that the washing liquid from the second gas washing part step (54b) is cleaned by evaporation or precipitation.

## Patentansprüche

1. Verfahren zur Reinigung von Rauchgas, das bei der Verbrennung von Müll, z.B. Hausmüll, entsteht und staubförmige Verunreinigungen, gasförmige organische Verunreinigungen, wie z.B. aromatische Chlorverbindungen, gasförmige anorganische und saurebildende Verunreinigungen, z.B. Chlorwasserstoff, Schwefeldioxid und Stickoxide, und gasförmige Spurenelemente, wie z.B. Schwermetalle, enthält, wobei das Rauchgas in einem Trennungsschritt (52) von den staubförmigen Verunreinigungen befreit wird, es danach in wenigstens einem Gaswäscheschritt (54a, 54b) von seinen gasförmigen anorganischen und säurebildenden Verunreinigungen gereinigt wird, und das Rauchgas vor dem Trennungsschritt (52) mit einer oder mehreren Substanzen in Kontakt gebracht wird, die mit den gasförmigen Spurenelementen reagieren und in Form trockener Pulver oder feiner Flüssigkeitstropfen eingesetzt werden, und/oder einem Adsorbtionsmaterial, das mit den gasförmigen organischen Verunreinigungen reagiert, um die Spurenelemente und/oder die zuletzt genannten Verunreinigungen in staubförmige Verunreinigungen zu überführen, die aus dem Rauchgas in dem vorgenannten Trennungsschritt abgetrennt werden, dadurch **gekennzeichnet,** dass die staubförmigen Verunreinigungen, die in dem Trennungsschritt (52) abgetrennt werden, auf eine solch hohe Temperatur erhitzt werden, das nahezu alle organischen Verunreinigungen zersetzt und dass die meisten der Spurenelemente verdampft werden, während die übrigen staubförmigen Verunreinigungen durch Schmelzen in glasartigen Sand überführt werden.

2. Verfahren gemäss Anspruch 1, dadurch **gekennzeichnet,** dass die mit den Spurenelementen regierende Substanz oder reagierenden Substanzen ein oder mehrere Metallsulfide, bevorzugt Natriumsulfid, sind.

3. Verfahren gemäss den Ansprüchen 1 oder 2, dadurch **gekennzeichnet,** dass das Adsorbsorbtionsmaterial aktivierter Kohlenstoff oder Zeolithe sind.

4. Verfahren gemäss einem der Ansprüche 1 bis 3, dadurch **gekennzeichnet,** dass die Erhitzung auf eine Temperatur oberhalb von 1100°C, bevorzugt oberhalb von 1300°C, erfolgt.

5. Verfahren gemäss Anspruch 4, dadurch **gekennzeichnet,** dass das bei der Erhitzung gebildete Gas durch Zuführen von kalter Luft schnell auf eine Temperatur unterhalb von 300°C, bevorzugt 200°C oder tiefer, abgekühlt wird.

6. Verfahren gemäss Anspruch 5, dadurch **gekennzeichnet,** dass zu dem Gas vor und/oder nach dem Abkühlen eine oder mehrere Substanzen zugemischt werden, die mit den gasförmigen Spurenelementen reagieren, um diese Spurenelemente in staubförmige Verunreinigungen zu überführen.

7. Verfahren gemäss Anspruch 6, dadurch **gekennzeichnet,** dass das Gas nach nochmaligem Abtrennen der staubförmigen Verunreinigungen zu dem bei der Müllverbrennung entstehenden Rauchgas zugemischt wird.

8. Verfahren gemäss den Ansprüchen 5 oder 6, dadurch **gekennzeichnet,** dass die Spurenelemente in mehreren selektiven Schritten abgetrennt werden.

9. Verfahren gemäss einem der vorstehenden Ansprüche, dadurch **gekennzeichnet,** dass das Rauchgas zwischen dem Trennungsschritt (52) und der Gaswäsche (54a, 54b) durch einen selektiven katalytischen Reaktor zur Reduktion der Stickoxide geleitet wird.

10. Verfahren gemäss einem der vorstehenden Ansprüche, dadurch **gekennzeichnet,** dass die Gaswäsche zwei Teilschritte umfasst (54a, 54b), dem Durchleiten einer sauren Waschflüssigkeit mit einem pH-Wert unterhalb von 2 im ersten Teilschritt der Gaswäsche (54a) und dem Durchleiten einer neutralen oder basischen Waschflüssigkeit im zweiten Teilschritt der Gaswäsche (54b).

11. Verfahren gemäss Anspruch 10, dadurch **gekennzeichnet,** dass die Waschflüssigkeit des ersten Teilschritts der Gaswäsche (54a) durch Elektrolyse gereinigt wird.

12. Verfahren gemäss Anspruch 10, dadurch **gekennzeichnet,** dass die waschflüssigkeit des zweiten Teilschritts der Gaswäsche (54b) durch Verdampfen oder Ausfällen gereinigt wird.

## Revendications

1. Procédé pour nettoyer un gaz de fumée formé lors de l'incinération de déchets, par exemple de déchets domestiques, et contenant des impuretés particulaires; des impuretés organiques gazeuses, telles que des composés chlorés aromatiques; des impuretés inorganiques et acidifiantes gazeuses, par exemple, du chlorure d'hydrogène, du dioxyde de soufre, et des oxydes d'azote; et des éléments trace gazeux, tels que des métaux lourds, le gaz de fumée étant nettoyé de ses impuretés particulaires dans une étape de séparation (52), après quoi il est nettoyé de ses impuretés inorganiques et acidifiantes gazeuses dans au moins une étape de lavage du gaz (54a, 54b), le gaz de fumée avant l'étape de séparation (52) étant mis en contact avec une ou plusieurs substances réagissant avec les éléments trace gazeux et fournies sous la forme d'une poudre sèche ou de fines gouttelettes de liquide, et/ou un matériau d'adsorption réagissant avec les impuretés organiques gazeuses, pour transformer les éléments trace et/ou les impuretés dernièrement mentionnées en des impuretés particulaires qui sont séparées du gaz de fumée dans l'étape de séparation susmentionnée, caractérisé en ce que les impuretés particulaires séparées dans l'étape de séparation (52) sont chauffées à une température tellement haute que sensiblement toute les impuretés organiques sont décomposées, et que la plupart des éléments trace sont évaporés, tandis que les impuretés particulaires restantes sont transformées en sable vitreux par fusion.

2. Procédé selon la revendication 1, caractérisé en ce que la substance ou les substances réagissant avec les éléments trace sont un ou plusieurs sulfures de métal, de préférence le sulfure de sodium.

3. Procédé selon la revendication 1 ou 2, caractérisé en ce que le matériau d'adsorption est du charbon actif ou une zéolite.

4. Procédé selon l'une quelconque des revendications 1 à 3, caractérisé en ce que le chauffage est effectué à une température au-dessus de 1100°C, de préférence au-dessus de 1300°C.

5. Procédé selon la revendication 4, caractérisé en ce que le gaz formé pendant ledit chauffage est rapidement refroidi à une température en-dessous de 300°C, de préférence en-dessous de 200°C ou plus bas, en fournissant de l'air froid.

6. Procédé selon la revendication 5, caractérisé en ce que une ou plusieurs substances réagissant avec lesdits élément trace sont mélangées audit gaz avant et/ou après le refroidissement pour la transformation des éléments trace en impuretés particulaires.

7. Procédé selon la revendication 6, caractérisé en ce que ledit gaz, après une séparation supplémentaire des impuretés particulaires, est mélangé au gaz de fumée produit par l'incinération des déchets.

8. Procédé selon la revendication 5 ou 6, caractérisé en ce que les éléments trace sont séparés dans un nombre d'étapes sélectives.

9. Procédé selon l'une quelconque des revendications précédentes, caractérisé en ce que le gaz de fumée, entre l'étape de séparation (52) et l'étape de lavage du gaz (54a, 54b), est conduit à travers un réacteur catalytique sélectif (53) pour la réduction des oxydes d'azote.

10. Procédé selon l'une quelconque des revendications précédentes, caractérisé en ce que l'étape de lavage du gaz comprend deux étapes partielles (54a, 54b), un liquide de lavage acide ayant de préférence un pH inférieur à 2 étant conduit pendant la première étape partielle, et un liquide de lavage basique ou neutre étant conduit pendant la seconde étape partielle.

11. Procédé selon la revendication 10, caractérisé en ce que le liquide de lavage de la première étape partielle de lavage du gaz (54a) est nettoyé par électrolyse.

12. Procédé selon la revendication 10, caractérisé en ce que le liquide de lavage de la seconde étape partielle de lavage du gaz (54b) est nettoyé par évaporation ou précipitation.
